## Europäisches Patentamt
## European Patent Office
## Office européen des brevets

(11) Numéro de publication: **0 190 515 B1**

(12) # FASCICULE DE BREVET EUROPÉEN

(45) Date de publication du fascicule du brevet:
**31.05.89**

(51) Int. Cl.⁴: **H 01 S 3/10, H 01 S 3/13**

(21) Numéro de dépôt: **85402305.8**

(22) Date de dépôt: **26.11.85**

(54) **Laser impulsionnel stabilisé en fréquence.**

(30) Priorité: **30.11.84 FR 8418266**

(43) Date de publication de la demande:
**13.06.86 Bulletin 86/33**

(45) Mention de la délivrance du brevet:
**31.05.89 Bulletin 89/22**

(84) Etats contractants désignés:
**DE GB IT NL SE**

(56) Documents cité:
**EP-A-0 009 108**

**OPTICS LETTERS, vol. 6, no. 11, novembre 1981, pages 554-556, Optical Society of America, New York, US; R.C. LIND et al.: "Demonstration of the longitudinal modes and aberration-correction properties of a continuous-wave dye laser with a phase-conjugate mirror"**
**IEEE JOURNAL OF QUANTUM ELECTRONICS, vol. QE-15, no. 10, octobre 1979, pages 1180-1188, IEEE, New York, US; J. AUYEUNG et al.: "A theoretical and experimental investigation of the modes of optical resonators with phase-conjugate mirrors"**
**APPLIED OPTICS, vol. 19, no. 4, 15 février 1980, pages 602-609, Optical Society of America, New York, US; P.A. BELANGER et al.: "Resonant modes of optical cavities with phase-conjugate mirrors"**

(73) Titulaire: **SAT Société Anonyme de Télécommunications, 41, rue Cantagrel, F-75631 Paris Cedex 13 (FR)**

(72) Inventeur: **Ouhayoun, Michel Maurice, 25, rue d'Hautpoul, F-75019 Paris (FR)**

(74) Mandataire: **Bloch, Robert, 2, square de l'Avenue du Bois, F-75116 Paris (FR)**

## Description

La présente invention concerne un laser impulsionnel, comprenant un premier milieu laser à excitation pulsée dans une cavité résonnante formée entre deux miroirs dont un miroir à conjugaison de phase par mélange à quatre ondes comportant un milieu non linéaire, secondaire, associé à au moins un laser de pompage pour envoyer de deux directions opposées et à la même fréquence deux faisceaux de pompage incidents sur le milieu secondaire.

Comme laser impulsionnel on peut considérer un laser dont le milieu gazeux, à une forte pression, au moins de l'ordre de l'atmosphère, est soumis à une excitation transversale pulsée. Un tel laser est appelé laser TEA (transversely excited atmospheric). L'excitation transversale pulsée est réalisée par décharge électrique d'un condensateur généralement au moyen de deux électrodes, ou armatures, longitudinales s'étendant dans le milieu gazeux.

L'intérêt des laser TEA est d'émettre des impulsions très brèves avantageusement utilisées en particulier en télémétrie. C'est ainsi qu'on peut obtenir par exemple des impulsions dont le pic principal a une durée de l'ordre de 100 ns, la forte pression du milieu gazeux permettant d'obtenir des impulsions à flanc de montée extrêmement raide, d'une durée de l'ordre de 20 ns.

Pour la mesure de distances, les lasers TEA conviennent parfaitement. La mesure du temps s'écoulant entre l'émission d'une impulsion laser TEA et la réception de son écho sur une cible fournit la distance de cette cible. Par contre, la meaure de vitesses avec ces lasers TEA pose un problème, car on ne sait pas mesurer des fréquences voisines de telle de la lumière. Pour résoudre ce problème, on procède alors à une détection hétérodyne, bien connue de l'homme de métier, par battement avec l'émission d'un laser continu à basse pression classique, dont on sait parfaitement stabiliser la fréquence d'émission.

L'émission d'un laser TEA s'effectue sur plusieurs modes longitudinaux simultanés correspondant aux diverses fréquences des photons spontanés stimulant l'avalanche de photons aux fréquences compatibles avec la longueur de la cavité résonnante du laser. Un laser TEA est ainsi un laser multimode à large bande d'amplification.

Le battement entre un laser TEA et un laser continu s'effectue sur le mode central du laser TEA, le laser TEA ayant été au préalable, et de façon connue, transformé en laser impulsionnel monomode, afin de ne pas perdre l'énergie des autres modes longitudinaux du laser TEA. Comme laser TEA monomode, on connaît, par exemple, et d'après l'article de Scott et al sur "Stabilization of Single Mode TEA Laser", paru dans Optics Communications vol. 50, n° 5, 1.7.1984, les lasers hybrides, les lasers à injection de fréquente ou les lasers à cavité tourte. L'invention ne portant pas sur la transformation d'un laser TEA multimode en laser TEA monomode, il est inutile, ici, de s'étendre davantage sur cette technique d'adaptation.

Si, comme on l'a déjà rappelé ci-dessus, il est parfaitement possible de maitriser la fréquence d'un laser continu, il n'en est absolument pas de même de la fréquence du mode central des lasers TEA connus, et plus généralement de la fréquence des lasers impulsionnels, du fait que le milieu gazeux laser est en pleine expansion au moment où l'émission laser apparaît et que la longueur optique de la cavité varie. Et même si on fait varier quelque peu la fréquence du laser continu de sélection d'un laser à injection de fréquente, par exemple, la fréquence d'émission du laser impulsionnel correspondra toujours à la fréquence propre du mode de la cellule impulsionnelle le plus proche de la fréquence du laser continu de sélection.

On conçoit donc aisément qu'un battemencentre un laser continu et un laser impulsionnel à fréquente non stabilisée peut donner lieu à un phénomène de glissement (chirp) tout-à-fait préjudiciable et qu'il est donc naturel de vouloir éliminer.

On connaît par ailleurs ce qu'on appelle les miroirs à conjugaison de phase, ou à décalage de fréquence. Il s'agit de milieux à coefficient d'absorption non linéaire, gazeux, solides ou liquides, dont la fonction est de refléchir, par exemple, un front d'onde incident à décalage de phase partiel, c'est-à-dire pourvu d'une distorsion, suivant un front d'onde réfléchi à décalage de phase partiel mais inversé, ou renversé, ou conjugué.

La fonction de ces miroirs à conjugaison de phase est parfaitement décrite dans l'art antérieur, notamment dans le brevet américain 4 233 571.

On connaît déjà, notamment et une fois encore par ce brevet américain 4 233 571, des miroirs à conjugaison de phase dits miroirs à conjugaison de phase par mélange à quatre ondes, comprenant un milieu non linéaire et au moins un laser de pompage extérieur, généralement ceux, pour émettre, à la même fréquente et dans deux directions opposées, au sens vectoriel, deux fronts d'onde de pompage incidents sur le milieu non linéaire. Un troisième front d'onde incident sur le milieu non linéaire, mais pourvu d'une distorsion de phase, ou de fréquence, est réfléchi, sous l'interaction des trois fronts d'onde incidents, suivant un quatrième front d'onde conjugué en phase.

Ainsi, un front d'onde dégénéré ou distordu à fréquence $\omega + \delta$, après avoir subi par exemple au niveau d'un milieu laser une distorsion $+\delta$, et incident sur un tel miroir, est réfléchi, comme dans tous autres miroirs à conjugaison de phase, suivant un front d'onde à fréquence $\omega - \delta$. Sur son trajet retour, et après passage dans le milieu laser, le front d'onde réfléchi, qui a, à nouveau, subi la même distorsion $+\delta$, se retrouve donc à la fréquence $\omega$.

La fonction du dispositif à milieu non linéaire associé à deux lasers de pompage du brevet américain 4 233 571 est donc de procurer une correction de front d'onde. Les lasers associés au milieu non linéaire n'assurent qu'une fonction de pompage. Ce dispositif vise à purifier le mode central d'émission d'un laser.

On remarquera par conséquent que le problème de la stabilisation de fréquence évoqué plus haut n'est absolument pas traité dans ce document américain de l'art antérieur.

L'article "A Theoretical and Experimental Investigation of the Modes of Optical Resonators with Phase-Conjugate Mirrors" de Auyeung et al, paru dans la revue IEEE Journal of Quantum Electronics, vol. QE-15, n° 10, Octobre 1979, enseigne de recopier dans un premier laser impulsionnel la fréquence d'un deuxième laser impulsionnel de pompage d'un miroir à conjugaison de phase. Mais il ne s'agit pas de stabilisation de la fréquence du premier laser impulsionnel et ce d'autant moins que la fréquence du second laser impulsionnel n'est en soi pas stable.

L'article "Demonstration of the Longitudinal Modes and aberration-correction properties of a continuous-wave dye laser with a phase-conjugate mirror" de Lind et al, paru dans la revue Optics letters, Vol. 6, n° 11, Novembre 1981, enseigne de stabiliser un laser continu à la fréquence d'un laser continu de pompage d'un miroir à conjugaison de phase. Mais aucun enseignement ne peut être tiré de cet article pour la stabilisation d'un laser impulsionnel.

Le problème de la stabilisation en fréquence d'un laser impulsionnel restait donc entier, et c'est ce problème que la demanderesse a résolu.

En conséquence, la présente invention concerne un laser impulsionnel, comprenant un premier milieu laser à excitation pulsée dans une cavité résonnante formée entre deux miroirs dont un miroir à conjugaison de phase par melange à quatre ondes comportant un milieu non linéaire, secondaire, associé à au moins un laser de pompage pour envoyer de deux directions opposées et à la même fréquence deux faisceaux de pompage incidents sur le milieu secondaire, laser caractérisé par le fait que le milieu laser non linéaire secondaire est un milieu amplificateur saturable et le laser de pompage est un laser continu à fréquence stable et égale à la fréquence des photons spontanés qui doivent déclencher l'émission, à la fréquence à stabiliser, du laser impulsionnel.

L'invention est remarquable par le progrès qu'elle apporte, puisque c'est la première fois qu'il est ainsi proposé de véritablement stabiliser en frequence un laser impulsionnel.

L'invention est également remarquable, car elle va à l'encontre d'un préjugé. Comme indiqué ci-dessus, on avait déjà proposé de combiner un laser impulsionnel et un miroir à conjugaison de phase à laser impulsionnel de pompage, d'une part, ou un laser continu et un miroir à conjugaison de phase à laser continu de pompage, d'autre part; mais on n'avait jamais songé à combiner les trois notions d'émission impulsionnelle, d'émission continue et de stabilisation en fréquence de l'émission impulsionnelle.

Le préjugé était d'autant plus ancré dans les esprits que la première théorie élaborée sur le mélange à quatre ondes dans un milieu amplificateur était fausse. Selon cette théorie, seul un laser de grande puissance, et donc un laser impulsionnel, d'un miroir à conjugaison de phase était susceptible d'asservir, mais non d'ailleurs de stabiliser, la fréquence d'un laser impulsionnel. Or, la vérité a été rétablie dans l'article "Phase Conjugation in Saturable Amplifiers by Degenerate Frequency Mixing", de Reintjes et al paru dans la revue IEEE Journal of Quantum Electronics, vol. QE-18, No. 11, Novembre 1982, vérité selon laquelle l'onde de pompage était également amplifiée dans le milieu non linéaire tout en donnant naissance à l'effet conjugué. Mais les autres de cet article n'en ont pas pour autant conclu qu'il était donc possible de combiner un laser impulsionnel, un miroir à conjugaison de phase et un laser continu de pompage. Le rétablissement de la vérité ne pouvait donc inciter l'homme de métier qu'à utiliser, comme laser de pompage, un laser impulsionnel de faible puissance.

En définitive, et grâce à l'invention, un laser impulsionnel peut maintenant être stabilisé en fréquence à l'aide d'un laser continu dont on sait parfaitement stabiliser la fréquence, sa pureté spectrale n'étant limitée que par la durée finie du gain dans son milieu amplificateur.

Dans un miroir à conjugaison de phase par mélange à quatre ondes, si la fréquence incidente, ou sonde, est $\omega_i$, la fréquence réfléchie conjuguée $\omega_c$, et les fréquences de pompape $\omega_1$ et $\omega_2$, on a la relation:

$$\omega_c = \omega_1 + \omega_2 - \omega_i$$
$$\text{Si } \omega_1 = \omega_2 = \omega,$$
$$\omega_c = 2\omega - \omega_i$$

Si la fréquence des photons spontanés du laser impulsionnel est $\omega$ et que cette fréquence subit un dècalage $+\delta$ dans le milieu laser, alors

$$\omega_i = \omega + \delta$$
$$\omega_c = 2\omega - (\omega + \delta),$$

la frequence des photons réfléchis qui vont déclencher l'avalanche étant aussi

$$(\omega - \delta) + \delta = \omega.$$

Si la fréquence des photons spontanés est différente de $\omega$, alors la fréquence des photons réfléchis avec une intensité d'ailleurs réduite, ne sera pas la même que celle des photons spontanés et l'avalanche de l'effet laser ne pourra pas se produire. En d'autres termes, seuls les photons spontanés à la fréquence de pompage continu du miroir à conjugaison de phase pourront provoquer l'effet laser.

On notera que la puissance du laser continu de pompage du miroir pourra être très faible.

On notera aussi que le miroir du laser impulsionnel de l'invention se comporte comme un filtre de fréquence réfléchissant et que le laser est un laser à mode unique dont la géométrie est identique à celle du laser pompe.

Le laser impulsionnel de l'invention comporte un miroir à conjugaison de phase qui peut être pompé par un ou deux lasers continus. Quand un seul laser continu est utilisé, le miroir à conjugaison de phase comporte en outre, et par exemple, un premier miroir semi-transparent et un deuxième miroir, tous deux classiques, ou tout autre moyen diviseur de faisceau optique.

Bien entendu, l'invention s'applique tout particulièrement à un laser impulsionnel à milieu gazeux sous forte pression, de l'ordre de l'atmosphère, et à excitation transversale (laser TEA), le milieu laser comprenant avantageusement du $CO_2$.

L'invention sera mieux comprise à l'aide de la description suivante de deux formes de réalisation du laser impulsionnel de l'invention, en référence aux dessins annexés, sur lesquels:

- la figure 1     représente schématiquement le laser impulsionnel de l'invention, dans son principe général, et
- la figure 2     représente schématiquement la forme de réalisation préférée du laser de l'invention.

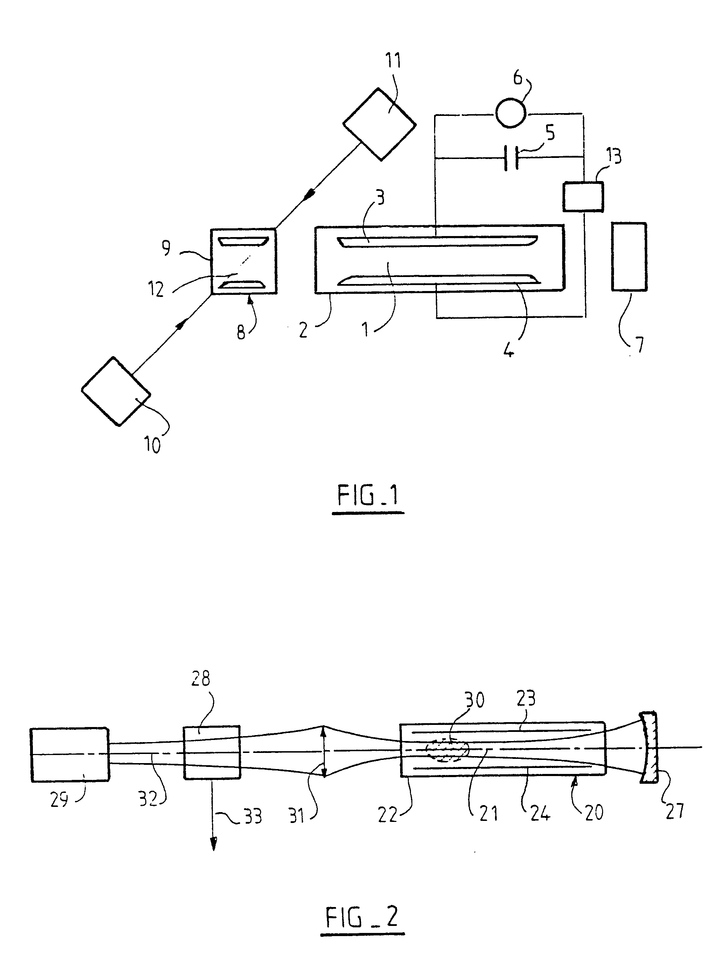

Le laser impulsionnel de la figure 1 comporte un premier milieu laser amplificateur TEA 1, à pression atmosphérique, confiné dans une enveloppe 2, soumis à une excitation électrique transversale pulsée, par l'intermédiaire de deux électrodes 3, 4, s'étendant longitudinalement à l'intérieur de l'enveloppe 2, un condensateur 5, dont les armatures sont respectivement reliées aux électrodes 3, 4, à l'aide d'un éclateur 13 qui joue le rôle d'interrupteur, et une source de tension 6, aux bornes du condensateur 5, pour sa décharge d'excitation. Le milieu laser 1 s'étend dans une cavité résonnante formée entre un premier miroir 7 semi-transparent classique, dit de sortie, et un miroir 8 à conjugaison de phase par mélange à quatre ondes.

Le miroir à conjugaison de phase 8 comporte un milieu TEA amplificateur saturable non linéaire 12 dans une cellule secondaire 9, similaire à la cellule principale 1 - 6 qui vient d'être décrite. Le milieu non linéaire de la cellule 9 est pompé par deux lasers continus 10, 11 stabilisés en fréquence, envoyant sur ce milieu deux faisceaux lumineux de pompage à la même fréquence et de deux directions vectoriellement opposées.

Seuls les photons spontanés du premier milieu TEA 1 à la fréquence des lasers de pompage 10, 11 provoqueront l'avalanche de l'effet laser dans la cellule principale.

Dans la forme de réalisation préférée du laser de la figure 2, sur laquelle les moyens d'excitation pulsée ne sont pas représentés, la cellule secondaire du miroir à conjugaison de phase est créée dans la cellule principale dont la fréquence est à stabiliser.

La cellule principale à milieu TEA est représentée en 20, dans une enveloppe 22, avec des électrodes 23, 24 et un milieu TEA 21 confiné dans l'enveloppe 22. La cellule 20 est disposée dans une cavité résonnante formée entre un miroir réfléchissant classique 27 et donc une partie 30 de son milieu laser confiné dans l'enveloppe 22.

A cette cellule principale est associé un miroir à conjugaison de phase comprenant un laser continu de pompage 29, stabilisé en fréquence, la partie 30 du milieu TEA de l'enveloppe 22 comme milieu non linéaire, une lentille de focalisation 31 pour délimiter cette partie 30, un isolateur optique 28, entre le laser continu 29 et la lentille 31, elle-même entre l'isolateur 28 et le milieu TEA, et le miroir 27, l'autre côté du milieu TEA, tous ces moyens étant alignés sur un axe 32. La longueur du milieu non linéaire peut être optimisée grâce à une distance focale appropriée de la lentille 31.

Un premier faisceau optique de pompage est émis directement par le laser continu 29, de la gauche vers la droite sur la figure 2. Ce faisceau traverse l'isolateur 28, qui peut être par exemple un polariseur associé à une lame quart d'onde ou un rotateur de Faraday, la lentille 31, le milieu laser, et est réfléchi sur le miroir 27 pour constituer le deuxième faisceau optique de pompage dans la direction opposée, de la droite vers la gauche sur la figure 2.

Une partie du milieu laser amplificateur dont la fréquence est à stabiliser constitue donc, grâce à la lentille 31, le milieu non linéaire du miroir à conjugaison de phase. Les deux milieux, qui n'en font qu'un, des cellules principale et secondaire sont donc ainsi avantageusement confinés dans la même enveloppe. Une deuxième cellule indépendante, pour le miroir à conjugaison de phase, et un deuxième laser continu de pompage sont donc ainsi éliminés. L'émission lumineuse du laser qui vient d'être décrit sort, à une fréquence stabilisée à celle du laser continu 29, par l'isolateur 28, après réflexion suivant une direction 33 distincte de l'axe 32. Le miroir à conjugaison de phase est donc ici le miroir de sortie de la cavité. Si la réflectivité du miroir à conjugaison de phase est supérieure à l'unité, le faisceau laser peut être extrait par le miroir 27 qui sera alors semi-transparent.

Pour la réalisation effective de ce laser impulsionnel, la demanderesse a utilisé, comme milieu TEA, et à titre d'exemple, un milieu gazeux, comprenant en l'occurrence du $CO_2$, et un laser continu de pompage à $CO_2$, d'une très faible puissance, de l'ordre de 4 W, et émettant sur une longueur d'onde d'environ 10 μm.

Il faut souligner ici que si on a décrit un laser TEA stabilisé en fréquence, l'invention s'applique également à tout autre laser impulsionnel.

## Revendications

1. Laser impulsionnel, comprenant un premier milieu laser à excitation pulsée (1; 20) dans une cavité resonnante formée entre deux miroirs (7, 8; 27, 30) dont un miroir (8; 30) à conjugaison de phase par mélange à quatre ondes comportant un milieu non linéaire (12; 30), secondaire, associé à au moins un laser de pompage (10, 11; 29) pour envoyer de deux directions opposées et à la même fréquence deux faisceaux de pompage incidents sur le milieu secondaire (12; 30), laser caractérisé par le fait que le milieu laser non linéaire secondaire (12; 30) est un milieu amplificateur saturable et le laser de pompage (10, 11; 29) est un laser continu à fréquence stable et égale à la fréquence des photons spontanés qui doivent déclencher l'émission, à la fréquence à stabiliser, du laser impulsionnel.

2. Laser selon la revendication 1, dans lequel le premier milieu laser est un milieu TEA (transversely excited atmospheric).

3. Laser selon l'une des revendications 1 et 2, dans lequel le premier milieu laser est un milieu gazeux à $CO_2$.

4. Laser selon l'une des revendications 1 à 3, dans lequel le second milieu non linéaire est un milieu TEA.

5. Laser selon l'une des revendications 1 à 4, dans lequel le second milieu non linéaire est pompé par deux lasers continus.

6. Laser selon l'une des revendications 1 à 4, dans lequel le second milieu non linéaire (30) du miroir à conjugaison de phase (29, 31, 30, 27) est une partie du premier milieu laser (20, 21) à stabiliser en fréquence.

7. Laser selon la revendication 6, dans lequel le miroir à conjugaison de phase par mélange à quatre ondes comporte un laser continu (29), une lentille (31) de focalisation, la partie (30) du premier milieu laser, un miroir réfléchissant (27).

8. Laser selon la revendication 7, dans lequel un isolateur optique (28) est disposé entre le laser continu de pompage (29) et la lentille (31).

## Patentansprüche

1. Impulslaser mit einem ersten stoßerregten Lasermedium (1; 20) in einem Resonanzhohlraum, der zwischen zwei Spiegeln (7, 8; 27, 30) gebildet ist, von dem ein Spiegel (8; 30) zur Phasenkonjugation durch Mischung von vier Wellen ein zweites nichtlineares Medium (12; 30) aufweist, das mindestens einem Pumplaser (10, 11; 29) zugeordnet ist, der zwei auf das zweite Medium (12; 30) einfallende Pumpstrahlenbündel von zwei entgegengesetzten Richtungen und mit der gleichen Frequenz ausschickt, dadurch gekennzeichnet, daß das zweite nichtlineare Lasermedium (12; 30) ein sättigbares Verstärkermedium ist und der Pumplaser (10, 11; 29) ein kontinuierlicher Laser mit einer stabilen Frequenz ist, die der Frequenz der spontanen Photonen, die die Emission des Impulslasers auf der zu stabilisierenden Frequenz auslösen werden, gleich ist.

2. Laser nach Anspruch 1, wobei das erste Lasermedium ein TEA (transversely excited atmospheric)-Medium ist.

3. Laser nach einem der Ansprüche 1 und 2, wobei das erste Lasermedium ein gasförmiges $CO_2$-Medium ist.

4. Laser nach einem der Ansprüche 1 bis 3, wobei das zweite nichtlineare Medium ein TEA-Medium ist.

5. Laser nach einem der Ansprüche 1 bis 4, wobei das zweite nichtlineare Medium durch zwei kontinuierliche Laser gepumpt wird.

6. Laser nach einem der Ansprüche 1 bis 4, wobei das zweite nichtlineare Medium (30) des Spiegels zur Phasenkonjugation (29, 31, 30, 27) ein Teil des ersten Lasermediums (20, 21) ist, das in der Frequenz zu stabilisieren ist.

7. Laser nach Anspruch 6, wobei der Spiegel zur Phasenkonjugation durch Mischung von vier Wellen einen kontinuierlichen Laser (29), eine Fokussierlinse (31), den Teil (30) des ersten Lasermediums, einen Reflexionsspiegel (27) umfaßt.

8. Laser nach Anspruch 7, wobei ein optischer Isolator (28) zwischen dem kontinuierlichen pumplaser (29) und der Linse (31) angeordnet ist.

## Claims

1. Pulsed laser comprising a first pulsed excitation lasing medium (1; 20) within a resonant cavity formed between two mirrors (7, 8; 27, 30) including one quater wave phase conjugate mirror (8; 30) comprising a second non-linear medium (12; 30) associated with at least one pumping (10, 11; 29) to send from two opposite directions and at the same frequency two incident pumping beams onto the second medium (12; 30), laser characterized in that the second nonlinear lasing medium (12; 30) is a saturable amplifying medium and the pumping laser (10, 11; 29) is continuous laser having a frequency stable and equal to the frequency of the spontaneous photons which should cause the emission, at the frequency to be stabilized, of the pulsed laser.

2. Laser according to claim 1, wherein the first lasing medium is a TEA (transversaly excited atmospheric) medium.

3. Laser according to one of claims 1 and 2, wherein the first lasing medium is a gas medium containing $CO_2$.

4. Laser according to one of claims 1 to 3, wherein the second non linear medium is a TEA medium.

5. Laser according to one of claims 1 to 4, wherein the second non linear medium is pumped by two continuous lasers.

6. Laser according to one of claims 1 to 4, wherein the second non linear medium (30) of the phase conjugate mirror (29, 31, 30, 27) is a part of the first lasing medium (20, 21) whose frequency is to be stabilized.

7. Laser according to claim 6, wherein the quater wave phase conjugate mirror comprises a continuous laser (29), a focusing lens (31), the part (30) of the first lasing medium, a reflecting mirror (27).

8. Laser according to claim 7, wherein an optical isolator (28) is situated between the pumping continuous laser (29) and the lens (31).

FIG.1

FIG_2